# EUROPEAN PATENT SPECIFICATION

(11) **EP 2 386 927 B1**
(45) Date of publication and mention of the grant of the patent: **13.09.2017**
(21) Application number: 11162580.2
(22) Date of filing: 15.04.2011
(51) Int. Cl.: G05D 23/13

(54) **Thermostatic faucet**
Thermostatische Armatur
Robinet thermostatique

(30) Priority: 13.05.2010 ES 201030705
(43) Date of publication of application: 16.11.2011
(73) Proprietor: Roca Sanitario, S. A., 08029 Barcelona (ES)
(72) Inventor: Munar Saura, Miguel Angel, 08029 Barcelona (ES)
(74) Representative: Oficina Ponti, SLP

(56) References cited:
- EP-A1- 0 156 122
- WO-A1-90/06465
- CN-Y- 200 946 691
- DE-A1- 4 237 435
- DE-U1-202009 000 525
- FR-A1- 2 542 058
- US-A- 5 025 983

## Description

The present invention refers to a thermostatic faucet, that can be used for a bath or a shower.

### BACKGROUND OF THE INVENTION

The use of thermostatic faucets for baths and showers instead of conventional mixing faucets is currently very common.

The advantage of the thermostatic faucets is clear, because they regulate automatically the outlet temperature of the mixed water.

However, the main drawback of the thermostatic faucets currently known is their high costs, so that the users consider this kind of faucets a luxury.

The high cost of the thermostatic faucets for baths and showers currently known is caused by the weight of their components and the complexity of their manufacturing.

The thermostatic faucets currently known comprise a lot of inner chambers with long and narrow walls, whose casting is complex with high loss percentages. These losses are presented in several steps of the productive process, having a higher cost if more processes are done.

As an alternative to the current productive process, the thermostatic faucet described in US 2009/0038700 was devised, whose features in common with the present invention are included in the preamble of claim 1. This faucet comprises a body inside which a water mixing module and a module for regulating the outflow engaged to each other are housed.

In the faucet described in this document, the water mixing module occupies substantially the whole length of the body, being housed in a great extent inside the module for regulating the outflow, so that the assembly of the two modules must be coaxial, limiting the design options of the body.

As example of other documents describing the prior art, could be cited e.g. CN200946691, WO90/06465, FR2542058, DE4237435, US5025983, EP0156122.

### SUMMARY OF THE INVENTION

With the thermostatic faucet of the invention said drawbacks can be solved, presenting other advantages that will be described.

The thermostatic faucet of the present invention comprises:
- a body provided with a hot water inlet, a cold water inlet and one or more outlets of mixed water;
- a thermostatic core that houses a thermostatic cartridge, said thermostatic cartridge determining the outlet temperature of the mixed water;
- a diverting core that houses a diverting cartridge, that determines the water flow mixed through one of the outlets;
said thermostatic core comprising a hot water inlet, a cold water inlet and an outlet of mixed water;
and it is characterized in that said thermostatic and diverting cores are advantageously placed one besides the other, being connected to each other by their inlets and outlets of cold water and mixed water.

This arrangement of the core permits an assembly that it is not necessarily coaxial, permitting different design options for the body. The distance between the water inlets can be changed, changing only the body. Furthermore, the cores of the faucet of the present invention are devised to be used with different body shells.

Advantageously, said diverting core comprises a cold water canalization chamber connected by an end with the cold water inlet of said body and by the other end to the cold water inlet of the thermostatic core.

Advantageously, said diverting core comprises a mixed water canalization chamber connected to the mixed water outlet of said thermostatic core.

According to a preferred embodiment, said inlets of the body comprise a pair of seats provided with a plurality of sealing gaskets, and said water inlets comprise, each one, a feeding core for canalizing the inlet water.

Preferably, said cores are made from a plastic material, even though the cores could be made from any suitable material.

Other advantages of the faucet of the present invention are the following:
- reduced cost thanks to the simplification of the casting;
- reduced weight of the body;
- reduced diameter of the body;
- the body does not comprise any zones with a temperature higher than the selected temperature.

### BRIEF DESCRIPTION OF THE DRAWINGS

For a better understanding of what has been disclosed, some drawings are attached in which, diagrammatically and only as a non-limitative example, a practical embodiment is shown.
Fig. 1 is a plan view of the sectioned faucet of the present invention;

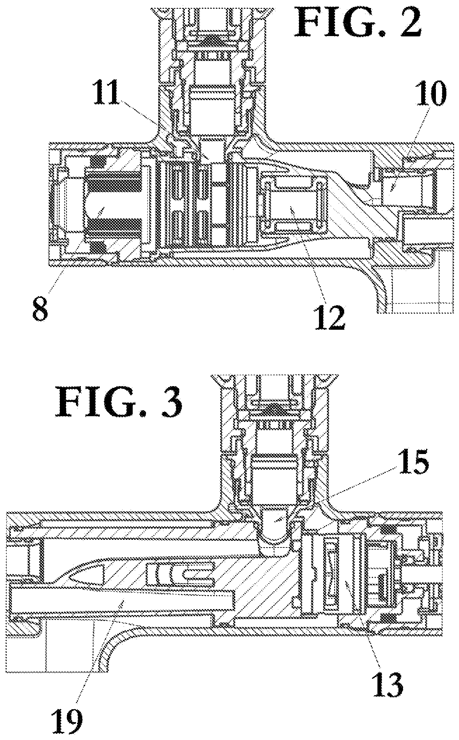

Fig. 2 is a section view of the thermostatic core of the faucet of the present invention;
Figs. 3 and 4 are section views of the diverting core of the present invention, in a plan and an elevation view, respectively; and
Fig. 5 is a section view of one of the water inlet connections from the mains.

### DESCRIPTION OF A PREFERRED EMBODIMENT

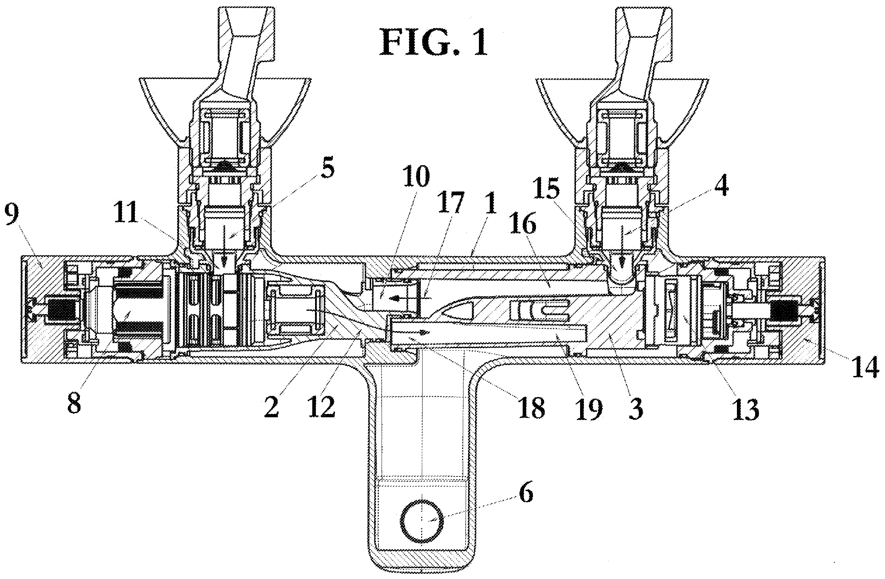

As shown in Fig. 1, the thermostatic faucet of the present invention comprises an external body or body shell, generally indicated by numeral reference 1, inside which a thermostatic core 2 and a diverting core 3 are housed.

Said thermostatic 2 and diverting 3 cores are placed one besides the other, connected only by one of their ends, as will be described hereinafter, and as shown clearly in Fig. 1.

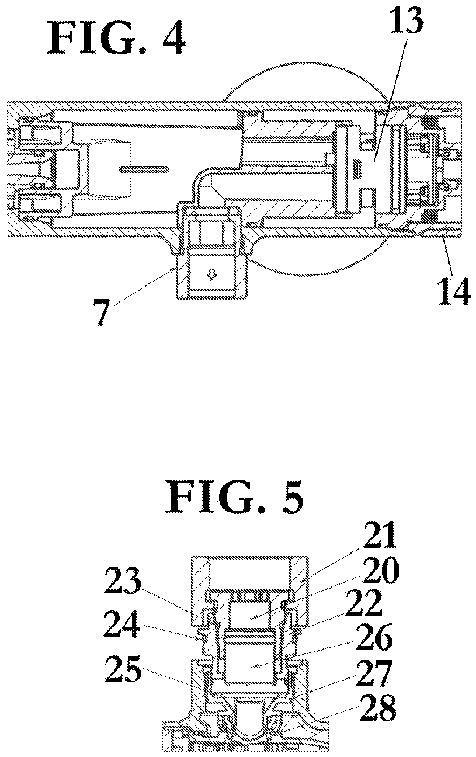

Said body 1 comprise a cold water inlet 4, a hot water inlet 5, a mixed water outlet for the bath 6 and a mixed water outlet for the shower 7 (not shown in Fig. 1, but shown in Fig. 4).

The thermostatic core 2 comprises inside it a thermostatic cartridge 8, which automatically regulates the water temperature that exits through the bath outlet 6 or through the shower outlet 7. The regulation of the outlet water temperature is done by a rotatable knob 9 provided at one of the ends of the faucet.

Said thermostatic core 2 also comprises a cold water inlet 10 that is communicated with the diverting core 3, a hot water inlet 11 connected with the hot water inlet 5 of the body 1, and a mixed water outlet 12 that is communicated with the diverting core 3.

On the other hand, the diverting core 3 comprises inside it a diverting cartridge 3, whose position determines the mixed water flow through the bath outlet 6 or through the shower outlet 7. The regulation of this position is determined by a knob 14 provided at one of the ends of the faucet.

Said diverting cartridge 3 also comprises a cold water inlet 15 connected to the cold water inlet of the body 1 and a cold water canalizing chamber 16 from said inlet 15 to a cold water outlet 17, which is connected to the cold water inlet 10 of the thermostatic core 2.

The mixed water outlet 12 of the thermostatic core 2 is connected with a mixed water inlet 18 of the diverting core 3, said diverting core comprising a mixed water canalization chamber 19, so that the mixed water is canalized to the diverting cartridge 13 and then to the bath 6 or shower 7 outlet.

In Fig. 5 the connection between the water inlets 4, 5 of the body 1 to the mains can be seen. This connection comprises a first seat 20 connected with a mains connection nut 21 and a second seat 22, engaged with said first seat 20 with the interposition of a first sealing gasket 23.

Said second seat 22 comprises inside it a anti-return valve 26 and it is externally provided with a second sealing gasket 24.

The connection shown in Fig. 5 also comprises a feeding core 27 that, with the interposition of a third sealing gasket 28, is connected to the water inlet 11, 15 of the thermostatic 2 and diverting 3 cores, respectively.

This feeding core 27 is also engaged with said second battery seat, with the interposition of a fourth sealing gasket 25.

It must be pointed out that said body 1 can be made from any suitable material, such as e.g. brass, and also said thermostatic 2 and diverting 3 cores can be made from any suitable material, such as e.g. plastic material.

The operation of the faucet of the present invention is the following:
Firstly, the user must define the outlet through which the water will outlet (bath or shower) by the knob 14 and outlet water temperature by the knob 9. The user can change the outlet water temperature and the kind of outlet at any time.

When the knob 9 is rotated to define the outlet water temperature, the cold and hot water from the mains will enter through said cold water 4 and hot water 5 inlets.

The hot water will enter inside the thermostatic core 2 through the water inlet 11 directly to the thermostatic cartridge 8.

On the other hand, the cold water will enter inside the diverting core 3 through its inlet 15 and it will be directed to the thermostatic core 2 through the conduction chamber 16. After passing through said conduction chamber 16, the cold water enters inside the thermostatic core 2 through the inlet 10, and it is mixed with the hot water inside the thermostatic cartridge 8. The proportion between the cold and hot water will depend on the temperature set by the user.

The mixed water from the thermostatic cartridge 8 will outlet the thermostatic core 2 through the outlet 12 and it will enter inside the diverting core 3 through the inlet 18, and it will be directed to the outlets 6, 7 through the conduction chamber 19. The outlet through which the mixed water outlets will depend on the diverting cartridge 13.

Even though reference is made to a specific embodiment of the invention, it is clear for a person skilled in the art that the described thermostatic faucet is susceptible of numerous variations and modifications, and that all the details cited can be substituted by other technically equivalent ones, without departing from the scope of protection define by the attached claims.

## Claims

1. Thermostatic faucet comprising:
- a body (1) provided with a hot water inlet (5), a cold water inlet (4) and one or more mixed water outlets (6, 7);
- a thermostatic core (2) disposed swithin the body (1) and housing a thermostatic cartridge (8), said thermostatic cartridge (8) determining the outlet temperature of the mixed water;
- a diverting core (3) disposed within the body (1) and housing a diverting cartridge (13), which determines the outflow of mixed water through one of said outlets (6, 7);
said thermostatic core (2) comprising a hot water inlet (11), a cold water inlet (10) and a mixed water outlet (12);
**characterized in that** said thermostatic (2) and diverting (3) cores are placed one besides the other, being connected to each other by their inlets (10, 18) and outlets (12, 17) of mixed and cold water and **in that** said diverting core (3) comprises;
- a cold water canalization chamber (16) connected by an end to the cold water inlet (4) of said body (1) and by the other end to the cold water inlet (10) of the thermostatic core (2) and,
- a mixed water canalization chamber (19) connected to the mixed water outlet (12) of said thermostatic core (2).

2. Thermostatic faucet according to claim 1, wherein said inlets (4, 5) of the body (1) comprise a pair of seats (20, 22) provided with a plurality of sealing gaskets (23, 24, 25).

3. Thermostatic faucet according to any of claims 1 to 2, wherein said cores (2, 3) are made from plastic material.

4. Thermostatic faucet according to claim 1, wherein said cold and hot water inlets (4, 5) comprise a feeding core (27) for canalizing the inlet water.

## Patentansprüche

1. Thermostatischer Hahn, der folgende Merkmale aufweist:
- einen Körper (1), der mit einem Warmwassereinlass (5), einem Kaltwassereinlass (4) und einem oder mehreren Gemischtwasserauslässen (6, 7) versehen ist;
- einen thermostatischen Kern (2), der in dem Körper (1) angeordnet ist und in dem eine thermostatische Kartusche (8) untergebracht ist, wobei die thermostatische Kartusche (8) die Auslasstemperatur des Gemischtwassers bestimmt;
- einen Umleitungskern (3), der in dem Körper (1) angeordnet ist und in dem eine Umleitungskartusche (13) untergebracht ist, die den Ausfluss von Gemischtwasser durch einen der Auslässe (6, 7) hindurch bestimmt;
wobei der thermostatische Kern (2) einen Warmwassereinlass (11), einen Kaltwassereinlass (10) und einen Gemischtwasserauslass (12) aufweist;
**dadurch gekennzeichnet, dass** der thermostatische Kern (2) und der Umleitungskern (3) nebeneinander platziert sind, wobei dieselben durch die Gemischt- und Kaltwassereinlässe (10, 18) und -auslässe (12, 17) derselben miteinander verbunden sind, und dadurch, dass der Umleitungskern (3) folgende Merkmale aufweist:
- eine Kaltwasserkanalisierungskammer (16), die durch ein Ende mit dem Kaltwassereinlass (4) des Körpers (1) und durch das andere Ende mit dem Kalteinlass (10) des thermostatischen Kerns (2) verbunden ist, und
- eine Gemischtwasserkanalisierungskammer (19), die mit dem Gemischtwasserauslass (12) des thermostatischen Kerns (2) verbunden ist.

2. Thermostatischer Hahn gemäß Anspruch 1, bei dem die Einlässe (4, 5) des Körpers (1) ein Paar von Auflagen (20, 22) aufweisen, die mit einer Mehrzahl von Dichtungen (23, 24, 25) versehen sind.

3. Thermostatischer Hahn gemäß einem der Ansprüche 1 bis 2, bei dem die Kerne (2, 3) aus einem Kunststoffmaterial gefertigt sind.

4. Thermostatischer Hahn gemäß Anspruch 1, bei dem der Kalt- und der Warmwassereinlass (4, 5) einen Zuführkern (27) zum Kanalisieren des Einlasswassers aufweisen.

## Revendications

1. Robinet thermostatique comprenant :
- un corps (1) muni d'une arrivée d'eau chaude (5), une arrivée d'eau froide (4) et une ou plusieurs sortie(s) d'eau mélangée (6, 7) ;
- un noyau thermostatique (2) disposé au sein du corps (1) et accueillant une cartouche thermostatique (8), ladite cartouche thermostatique (8) déterminant la température de sortie de l'eau mélangée;
- un noyau de dérivation (3) disposé au sein du corps (1) et accueillant une cartouche de dérivation (13), qui détermine le débit de sortie de l'eau mélangée à travers l'une desdites sorties (6, 7) ;
ledit noyau thermostatique (2) comprenant une arrivée d'eau chaude (11), une arrivée d'eau froide (10) et une sortie d'eau mélangée (12) ;
**caractérisé en ce que** lesdits noyaux thermostatique (2) et de dérivation (3) sont placés l'un à côté de l'autre, étant connectés l'un à l'autre par leurs arrivées (10, 18) et sorties (12, 17) d'eau mélangée et d'eau froide et **en ce que** ledit noyau de dérivation (3) comprend:
- une chambre de canalisation d'eau froide (16) dont l'une des extrémités est connectée à l'arrivée d'eau froide (4) dudit corps (1) et l'autre extrémité à l'arrivée d'eau froide (10) du noyau thermostatique (2) et,
- une chambre de canalisation d'eau mélangée (19) connectée à la sortie d'eau mélangée (12) dudit noyau thermostatique (2).

2. Robinet thermostatique selon la revendication 1, dans lequel lesdites arrivées (4, 5) du corps (1) comprennent une paire de sièges (20, 22) munis de plusieurs joints d'étanchéité (23, 24, 25).

3. Robinet thermostatique selon une quelconque des revendications 1 à 2, dans lequel lesdits noyaux (2, 3) sont fabriqués en matière plastique.

4. Robinet thermostatique selon la revendication 1, dans lequel les arrivées d'eau froide et d'eau chaude (4, 5) comprennent un noyau d'alimentation (27) pour canaliser l'eau d'arrivée.
